# EUROPÄISCHE PATENTSCHRIFT

(11) **EP 2 170 581 B1**
(45) Veröffentlichungstag und Bekanntmachung des Hinweises auf die Patenterteilung: **24.04.2013**
(21) Anmeldenummer: 08784917.0
(22) Anmeldetag: 21.07.2008
(51) Int. Cl.: B29C 53/56, F16L 59/14, F16L 59/02

(54) **VERFAHREN ZUR HERSTELLUNG EINER ROHRSCHALE AUS MINERALWOLLE DURCH EINEN WICKELVORGANG SOWIE HIERMIT HERGESTELLTE ROHRSCHALE**
METHOD FOR THE PRODUCTION OF A CONDUIT SHELL MADE OF MINERAL WOOL BY MEANS OF A WINDING PROCESS, AND CONDUIT SHELL PRODUCED THEREWITH
PROCÉDÉ DE FABRICATION D'UNE COQUE TUBULAIRE EN LAINE MINÉRALE PAR UN PROCESSUS D'ENROULEMENT AINSI QU'UNE COQUE TUBULAIRE FABRIQUÉE AVEC LEDIT PROCÉDÉ

(30) Priorität: 19.07.2007 DE 102007033794
(43) Veröffentlichungstag der Anmeldung: 07.04.2010
(73) Patentinhaber: SAINT-GOBAIN ISOVER G+H AG, 67059 Ludwigshafen (DE)
(72) Erfinder: SCHUMM, Michael, 69198 Schriesheim (DE); SCHWORM, Stefan, 67098 Bad Dürkheim (DE)
(74) Vertreter: Kuhnen & Wacker
(86) Internationale Anmeldenummer: PCT/EP2008/005951
(87) Internationale Veröffentlichungsnummer: WO 2009/010307

(56) Entgegenhaltungen:
- WO-A-2006/123015
- DE-A1- 19 831 752

## Beschreibung

Die Erfindung betrifft ein Verfahren zur Herstellung einer Rohrschale aus Mineralwolle durch einen Wickelvorgang sowie Rohrschalen, welche mittels diesem Verfahren herstellbar sind.

Rohrschalen werden häufig zum Dämmen von Rohrleitungen eingesetzt, um Energieverluste beispielsweise bei Heizungs- oder Brauchwasserleitungen zu minimieren. In einem weiteren Anwendungsgebiet werden derartige Rohrschalen auch zur Schallpegelminderung in Rohrleitungssystemen beispielsweise von Heizungsanlagen, Schornsteinsystemen oder Lüftungssystemen verwendet. In diesen Einsatzfällen macht man sich die offenporige Struktur von Mineralwollematerialien zu nutze, um durch die im porösen Material gefangene Luft eine gute thermische Dämmung zu erzielen oder die Schallenergie der durchströmenden Gase weitestgehend dadurch zu vernichten, dass man die Schallwellen in geeigneter Weise reflektiert und absorbiert.

Die Dämmlage derartiger Rohrschalen wird in der Regel durch Wickeln einer Vliesbahn aus Mineralwolle auf einem Wickeldorn einer Wickelmaschine hergestellt und kann auch eine zusätzliche Außenkaschierung aufweisen. In einer derartigen Wickelmaschine stellt ein Kern mit in der Regel drei um diesen Kern herum angeordneten Gegenwalzen das wesentliche Aggregat dar, in welchem der Wickelvorgang erfolgt. Hierbei bestimmt der Kern den Innendurchmesser der herzustellenden Rohrschale und wird in der Regel beheizt, um eine erste Formstabilität der Rohrschale beim Anwickeln zu erzielen. Die Gegenwalzen drücken dabei das Mineralwollevlies an den Kern an und bestimmen die Wandungseigenschaften sowie die Oberfläche der herzustellenden Rohrschale.

Das herkömmliche Verfahren hierzu sieht zunächst eine Positionierung des Kerns sowie der Gegenwalzen auf ihre Anfangslage vor, wobei ein Anfangsabstand zwischen den Gegenwalzen und den Kern hergestellt wird, welcher abhängig von der jeweiligen Dicke des Mineralwollevlieses gewählt wird. Anschließend erfolgt der Anwickelungsschritt, bei dem das Mineralwollevlies beim Einlauf in die Vorrichtung vom Kern und der unteren Gegenwalze erfasst und umgelenkt wird. Während dieses kurzzeitigen Anwickelvorgangs wird der Anfangsabstand zwischen dem Kern und den Gegenwalzen üblicherweise beibehalten. Anschließend erfolgt der eigentliche Wickelungsschritt, bei dem das Mineralwollevlies um den Kern aufgewickelt wird. Hierbei entfernen sich die Gegenwalzen vom Kern mit zunehmenden Umwickelungsfortschritt in gesteuerter Weise, wobei zugleich auch die Umdrehungsgeschwindigkeiten der Gegenwalze und des Kerns angepasst werden. Sobald der Wickelungsschritt abgeschlossen ist, wird die so ausgeformte Rohrschale zum Zwecke des Oberflächeglättens mit den erreichten Endparametern der gesteuerten Elemente zunächst weiter gedreht, bis die Rohrschale in einen Übergabearm oder dergleichen ausgeworfen und zu einem Härteofen weiter transportiert wird. In einem Beispiel einer herkömmlichen Wickelmaschine ist der Kern hierzu zweiteilig ausgebildet, wobei die beiden Kernteile zum Auswerfen der Rohrschale zu den beiden Seiten des selben herausgezogen werden, so dass die Rohrschale herabfallen kann.

Die für diese Verfahrensweise wesentlichen Betriebsparameter sind dabei die Umdrehungsgeschwindigkeit des Kerns, die Umdrehungsgeschwindigkeiten der Gegenwalzen, der Anfangsabstand zwischen Kern und Gegenwalzen, der Endabstand zwischen dem Kern und den Gegenwalzen sowie die Geschwindigkeit mit der der Abstand zwischen dem Kern und den Gegenwalzen verändert wird.

Bei einem herkömmlichen Verfahren zur Herstellung einer derartigen Rohrschale, wie es beispielsweise aus der DE 103 17 937 A1 bekannt ist, sind diese Verfahrensparameter so gewählt, dass sich eine möglichst homogene Rohdichteverteilung in der Rohrschale erzielen lässt. Da sich mit zunehmenden Wicklungsfortschritt auf dem Kern der wirksame Radius an dieser Stelle erhöht, wird dementsprechend herkömmlich die Umdrehungsgeschwindigkeit des Kerns zugleich deutlich reduziert. Damit lässt sich die Änderung der Umfangsgeschwindigkeit an dieser Stelle in Grenzen halten. Zugleich nimmt beim herkömmlichen Verfahren auch die Umdrehungsgeschwindigkeit der Gegenwalzen vom Anfang zum Ende des Wickelvorgangs hin zu, während die Gegenwalzen mit immer geringerer Geschwindigkeit vom Kern weg bewegt werden. Auf diese Weise wird bei der Wicklung der Außenbereiche der Rohrschale versucht, mehr Material in das größere Volumen in diesem Umfangsbereich einzubringen. Derartige Rohrschalen mit homogener Rohdichteverteilung über die Wandung hinweg haben sich in der Praxis sehr bewährt.

Allerdings ist es bekannt, dass eine hohe Rohdichte notwendig ist, um bei höheren Temperaturen, wie sie üblicherweise im kernnahen Bereich einer Rohrschale auftreten, eine gute Wärmedämmung zu erzielen. In den kälteren Außenbereichen der Rohrschale ist hingegen eine geringere Rohdichte ausreichend, so dass die Rohrschale in diesen Bereichen hinsichtlich der Rohdichte überdimensioniert ist. Insofern wurde als wünschenswert erkannt, dass durch eine Reduzierung der Rohdichte gerade im Außenbereich Material eingespart und somit Gewicht reduziert werden kann.

Daher sind in der Praxis Rohrschalen bekannt geworden, welche zweiteilig ausgebildet sind. Sie weisen eine innere Rohrschale mit höherer Rohdichte sowie eine äußere Rohrschale mit geringerer Rohdichte auf, welche hinsichtlich ihrer Radien aufeinander angepasst sind. Die innere und die äußere Rohrschale werden dabei jedoch an unterschiedlichen Vorrichtungen separat voneinander gefertigt. Diese Vorgehensweise hat sich nicht bewährt, da sie sowohl im Hinblick auf die Herstellung der unterschiedlichen Rohrschalenteile als auch hinsichtlich deren Lagerung sowie die Transportlogistik problematisch ist. Darüber hinaus ist auch der Aufwand für eine Installation dieser beiden Rohrschalenteile am Einsatzort relativ hoch.

Aus der WO 2006/123015 A1 ist schließlich eine Rohrschale bekannt geworden, welche einstückig ausgebildet ist und dabei dennoch wenigstens zwei Bereiche mit unterschiedlicher Rohdichte aufweist. Hierbei hat diese bekannte Rohrschale eine erhöhte Rohdichte im Kernbereich im Vergleich zum äußeren Mantelbereich. Dies wird hier dadurch erreicht, dass das durch eine Fördereinrichtung herangeführte Mineralwollevlies entweder vor dem Einlauf in die Wickelvorrichtung oder durch eine erste Gegenwalze in der Wickelvorrichtung zur Erhöhung der Rohdichte komprimiert wird, woraufhin zu einem vorbestimmten Zeitpunkt die Kompressionswalze abgehoben bzw. die erste Gegenwalze auf größerem Abstand zum Wickelkern bewegt wird, so dass die Kompressionswirkung entfällt. Die Erhöhung der Rohdichte wird somit alleine durch eine Dickenkomprimierung des Vlieses im ersten Abschnitt des Wickelvorganges erzielt.

Das Verfahren ist für Mineralwollevliese mit hohen Rückstellkräften, wie insbesondere solchen aus Glaswolle, nur bedingt geeignet, da die Komprimierung weitgehend durch ein Wiederaufgehen des Vlieses hinter der Komprimierung aufgehoben wird.

Der Erfindung liegt daher die Aufgabe zu Grunde, ein verbessertes Verfahren zur Herstellung einer Rohrschale aus Mineralwolle durch einen Wickelvorgang bereitzustellen, mittels dem der Rohdichtegradient innerhalb der Wandung der Rohrschale mit geringem verfahrenstechnischen Aufwand besonders exakt einstellbar ist.

Diese Aufgabe wird durch das Verfahren mit den Merkmalen des Anspruches 1 gelöst. Dieses weist die Schritte auf: Bereitstellen eines Mineralwollevlieses mit nicht ausgehärtetem Bindemittel, Zuführen des Mineralwollevlieses zu einer Wickelstation, welche einen Kern sowie wenigstens eine Gegenwalze aufweist, Aufwickeln des Mineralwollevlieses um den Kern, wobei die wenigstens eine Gegenwalze im Zuge des Wickelvorgangs ausgehend von einem Anfangsabstand weiter vom Kern weg zu dem Endabstand bewegt wird, und wobei die wenigstens eine Gegenwalze zu Beginn des Wickelvorgangs mit einer höheren Umdrehungsgeschwindigkeit als am Ende des Wickelvorgangs angetrieben wird.

Die Erfindung sieht somit erstmals vor, die Rohdichte in der Wandung einer Rohrschale dadurch einzustellen, dass das Mineralwollevlies am Anfang des Prozesses schneller angewickelt wird, wodurch im Vergleich zum Stand der Technik im gleichen Zeitraum mehr Material auf den Kern gelangt. Hierdurch lässt sich eine höhere Rohdichte im Kernabschnitt der Rohrschale erzielen.

Da die wenigstens eine Gegenwalze zudem im Zuge des Wickelvorganges mit sinkender Umdrehungsgeschwindigkeit angetrieben wird, erfolgt das Einziehen des Mineralwollevlieses zum Ende des Wickelvorgangs hin langsamer, wodurch weniger Material im Mantelbereich der Rohrschale zu liegen kommt. Hierdurch stellt sich dort eine geringere Rohdichte als im Kernabschnitt ein.

Im Rahmen der Erfindung wurde somit erkannt, dass sich durch den relativ geringen Aufwand der Veränderung der Verfahrensparameter im Hinblick auf die Umdrehungsgeschwindigkeit der wenigstens einen Gegenwalze eine gezielte Beeinflussung der Rohdichte in der Rohrschalenwandung erzielen lässt. Dies kann dabei ohne Umbau an herkömmlichen Wickelstationen erfolgen, so dass das erfindungsgemäße Verfahren problemlos an gegebenen Fertigungslinien einsetzbar ist. Die Erfindung lässt sich somit mit geringem Aufwand in der Praxis umsetzen.

Darüber hinaus lässt sich durch eine gezielte Steuerung der Umdrehungsgeschwindigkeit der wenigstens eine Gegenwalze somit der Rohdichtegradient innerhalb der Wandung der Rohrschale sehr exakt steuern, wobei zugleich ein Aufgehen des Mineralwollevlieses unterbunden werden kann.

Überdies lassen sich so Rohrschalen mit vorbestimmtem Rohdichtegradienten in einem kontinuierlichem Fertigungsverfahren und in einem Zuge herstellen. Zugleich kann dabei das Mineralwollematerial optimiert eingesetzt werden, so dass die verwendete Rohstoffmenge gering gehalten werden kann. Dies wirkt sich vorteilhaft auf die Fertigungskosten aus.

Ferner lässt sich die herzustellende Rohrschale somit problemlos im Hinblick auf das Dämmverhalten optimieren, da der somit auf das erforderliche Maß gezielt einstellbare Rohdichtewert im jeweiligen Abschnitt der Wandung einer derartig hergestellten Rohrschale zu einer Optimierung der Rohdichteverteilung führt, wodurch üblicherweise bei gleicher Masse die Dämmwirkung steigt bzw. gleicher Dämmwirkung die Masse reduziert werden kann.

Vorteilhafte Weiterbildungen des erfindungsgemäßen Verfahrens sind Gegenstand der abhängigen Ansprüche 2 bis 10.

Es hat sich in praktischen Versuchen gezeigt, dass es besonders günstig ist, wenn die Umdrehungsgeschwindigkeit der wenigstens einen Gegenwalze am Ende des Wickelvorganges etwa 20 bis 80% geringer als zu Beginn des Wickelvorgangs ist. Damit lässt sich je nach gewünschtem Rohdichtegradienten innerhalb der Rohrschale eine gezielte Konfiguration im Wickel herstellen, ohne dass es hierbei zu ungünstigen Stauch- oder Streckeffekten kommt. Dabei hat sich eine Reduzierung der Umdrehungsgeschwindigkeit im Bereich zwischen 30 und 70% gegenüber der Anfangs-Umdrehungsgeschwindigkeit der wenigstens einen Gegenwalze als besonders vorteilhaft erwiesen.

Hierbei ist es zudem möglich, dass die Umdrehungsgeschwindigkeit der wenigstens einen Gegenwalze im Zuge des Wickelvorgangs stetig verringert wird, wodurch sich eine Rohrschale mit einem im Wesentlichen ebenfalls stetig sich verändernden Rohdichtegradienten in der Wandung erzielen lässt. Eine derartige Rohrschale ist in vielen Anwendungsfällen bevorzugt.

Alternativ ist es jedoch auch möglich, dass die Umdrehungsgeschwindigkeit der wenigstens einen Gegenwalze im Zuge des Wickelvorgangs unstetig verringert wird, so dass sich ein Rohdichtegradient ergibt, welcher in vorbestimmter Weise über die Wandung der Rohrschale hinweg variiert. Dabei kann die Reduzierung der Umdrehungsgeschwindigkeit insbesondere in Stufen erfolgen, so dass sich eine Rohrschale erzielen lässt, bei der die Rohdichte in gewissen Zonen im Wesentlichen konstant ist und dann zu benachbarten Zonen in der Wandung in vorbestimmter Weise anders gewählt ist. Auch diese Ausgestaltungsweise ist für bestimmte Einsatzfälle bevorzugt.

Dabei hat es sich in praktischen Versuchen ferner gezeigt, dass es vorteilhaft ist, wenn die Umdrehungsgeschwindigkeit der wenigstens einen Gegenwalze gleich oder größer als eine Umdrehungsgeschwindigkeit des Kerns ist. Hierdurch lassen sich unerwünschte Effekte wie beispielsweise eine Faltenbildung oder dergleichen im Zuge des Wickelvorgangs besonders zuverlässig vermeiden, so dass eine qualitativ hochwertige Rohrschale erzielbar ist.

Wenn die Umdrehungsgeschwindigkeit des Kerns im Zuge des Wickelvorgangs reduziert wird, kann mit einfachen Mitteln der an sich ansteigenden Umfangsgeschwindigkeit angesichts des wachsenden Radius am Wickel entgegen gewirkt werden. Hierdurch wird somit erreicht, dass das Mineralwollevlies besonders gleichmäßig eingezogen wird und keinen die Faserstruktur zerstörenden Faktoren unterliegt.

Zudem hat es sich in praktischen Versuchen als vorteilhaft erwiesen, wenn die Umdrehungsgeschwindigkeit des Kerns am Ende des Wickelvorgangs etwa 30 bis 80% kleiner als zu Beginn des Wickelvorgangs ist. In diesem Bereich lässt sich das Verfahren besonders gut steuern, um hochwertige Rohrschalen zu erzielen. Besonders bevorzugt ist dabei eine Reduzierung der Umdrehungsgeschwindigkeit des Kerns zwischen 40 und 70% im Zuge des Wickelvorgangs.

Ferner ist es auch möglich, dass die wenigstens eine Gegenwalze im Zuge des Wickelvorgangs nicht mit gleichmäßiger Geschwindigkeit vom Kern weg bewegt wird. Durch Variation dieses weiteren Verfahrensparameters lässt sich die erfindungsgemäß angestrebte Rohdichteverteilung in der Wandung der Rohrschale noch besser erzielen. Zudem ist auch hierzu kein Umbau an herkömmlichen Wickelvorrichtungen erforderlich, da die gewünschte Variation des Parameters verfahrenstechnisch bewirkt werden kann.

Hierbei kann die wenigstens eine Gegenwalze zu Beginn des Wickelvorgangs langsamer und am Ende des Wickelvorgangs schneller vom Kern weg bewegt werden. Hierdurch wird erreicht, dass der zur Verfügung stehende Raum zu Beginn des Wickelvorgangs geringer ist als im weiteren Verlauf desselben, wodurch das eingezogene Mineralwollevlies zusätzlich verdichtet wird und sich im Kernabschnitt der hierdurch hergestellten Rohrschale eine nochmals höhere Rohdichte ergibt als im Mantelabschnitt desselben.

In praktischen Versuchen hat sich gezeigt, dass es besonders vorteilhaft ist, wenn sich die Geschwindigkeit, mit der sich die wenigstens eine Gegenwalze vom Kern weg bewegt, im Zuge der Bewegung um 50 bis 200% erhöht. Hierdurch lässt sich eine Rohdichteverteilung innerhalb der Wandung der Rohrschale im besonders großem Variationsbereich erreichen, wodurch sich ein vielfältiges Einsatzspektrum für eine so ausgebildete Rohrschale erzielen lässt.

Gemäß einem weiteren Aspekt der Erfindung wird nach Anspruch 11 eine Rohrschale aus Mineralwolle geschaffen, welche insbesondere nach dem erfindungsgemäßen Verfahren hergestellt ist und eine höhere Rohdichte in einem inneren Wandungsbereich als in einem äußeren Wandungsbereich aufweist, wobei die Rohdichte innerhalb der Wandung quasi kontinuierlich von innen nach außen abnimmt.

Die Rohrschalen gemäß Anspruch 11 zeichnen sich dabei durch ihre einstückige Struktur sowie ihre hervorragenden Dämmeigenschaften bei vergleichsweise geringem Gewicht aus. Zudem weisen sie einen Rohdichtegradienten innerhalb der Wandung der Rohrschale auf, welcher jeweils für bestimmte Anwendungsfälle besonders vorteilhaft ist.

Die Erfindung wird nachfolgend in Ausführungsbeispielen anhand der Figuren der Zeichnung näher erläutert. Es zeigt:
Fig. 1 eine schematische Seitenansicht einer Wickelstation, an welcher das erfindungsgemäße Verfahren ausführbar ist; und
Fig. 2 eine perspektivische Ansicht einer hiermit hergestellten Rohrschale.

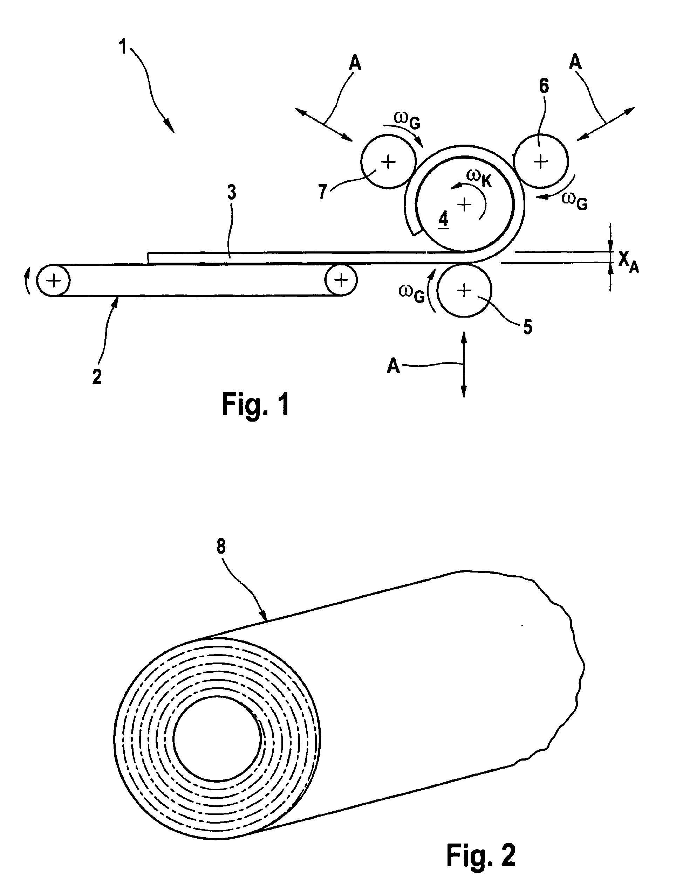

Gemäß der Darstellung in Fig. 1 weist eine Wickelstation 1 ein Zuführband 2 auf, mittels welchem ein Mineralwollevlies 3 zu einem Kern 4 gefördert wird. In einem gleichen Winkelabstand von 120° um den Kern 4 herum und im gleichen radialen Abstand hierzu sind ferner Gegenwalzen 5, 6 und 7 um den Kern 4 herum positioniert.

Wie aus Fig. 1 erkennbar ist, läuft das Mineralwollevlies 3 durch einen Spalt zwischen der Gegenwalze 5 und dem Kern 4 in den Wickelbock ein und wird dort erfasst sowie um den Kern 4 herum umgelenkt. Der Freiraum zwischen dem Kern 4 und der Gegenwalze 5 entspricht in der in Fig. 1 gezeigten Situation einem Anfangsabstand X_{A}, welcher zu Beginn des Anwickelvorgangs gegeben ist.

Im Zuge des Wickelvorgangs wird der Abstand zwischen dem Kern 4 und den Gegenwalzen 5, 6 und 7 mit steigender Geschwindigkeit vergrößert, wobei die Gegenwalzen 5, 6 und 7 hierzu entlang der durch die Pfeile A symbolisierten Wegstrecke geführt werden, bis ein vorbestimmter Endabstand erreicht ist. Dieser entspricht einem gewünschten Außendurchmesser einer herzustellenden Rohrschale.

Der Kern 4 wird dabei mit einer Umdrehungsgeschwindigkeit ω_{K} angetrieben, wobei diese im Zuge des Wickelvorgangs gesteuert reduziert wird. Dadurch wird in gewissem Rahmen der sich im Zuge des Wickelvorgangs erhöhenden Umfangsgeschwindigkeit am Kern 4 mit den darauf aufgewickelten Wickellagen und dem somit sich vergrößernden Radius Rechnung getragen.

Die Gegenwalzen 5, 6 und 7 werden gegenläufig zum Kern 4 angetrieben. Sie weisen hierbei eine Umdrehungsgeschwindigkeit ω_{G} auf, welche an allen Gegenwalzen gleich groß ist. Die Umdrehungsgeschwindigkeit ω_{G} wird mit zunehmenden Wickelvorgang reduziert, um so zu Beginn des Wickelvorgangs mehr Material als am Ende des Wickelvorgangs einzuziehen. Hierdurch ergibt sich in den zum Kern 4 benachbarten Lagen der herzustellenden Rohrschale eine größere Rohdichte als in deren äußeren Lagen. Die Umdrehungsgeschwindigkeit ω_{G} wird dabei im gezeigten Ausführungsbeispiel stetig reduziert, so dass sich innerhalb der Wandung einer hierdurch hergestellten Rohrschale ein im Wesentlichen sich stetig reduzierender Rohdichtegradient vom Kernabschnitt zum äußeren Mantelabschnitt hin ergibt.

In der in Fig. 1 angedeuteten Weise werden schließlich mehrere Lagen des Mineralwollevlieses übereinander gewickelt, bis der gewünschte Außendurchmesser einer herzustellenden Rohrschale erzielt ist. Anschließend wird der Kern 4, welcher üblicherweise zweiteilig ausgebildet ist, zu beiden Seiten aus dem gewickelten Formkörper herausgezogen, so dass dieser, nachdem die Gegenwalzen auf größeren Abstand vom Kern 4 weg bewegt werden, herausfallen und zu einem Härteofen transportiert werden kann.

In Fig. 2 ist eine perspektivische Ansicht einer derart hergestellten Rohrschale 8 gezeigt. Dabei sind die Grenzflächen der einzelnen Wickellagen mit einer strichpunktierten Linie angedeutet, um den Aufbau der Rohrschale 8 zu verdeutlichen. Da das Bindemittel im Mineralwollevlies 3 erst nach dem Wickelschritt ausgehärtet wird, stellen diese Trennlinien zwischen den einzelnen Lagen jedoch keine tatsächlichen Trennschichten dar; vielmehr ist die Rohrschale 8 ein einstückig ausgebildeter und fest gefügter Körper.

Praktische Versuche im Rahmen der Erfindung haben gezeigt, dass sich mit der erfindungsgemäßen Rohrschale 8 bei gleichem Materialeinsatz wie bei einer herkömmlichen Rohrschale mit homogener Rohdichteverteilung eine Reduzierung der Wärmeverluste von 5 bis 10% problemlos erzielen lassen. Andererseits kann unter Beibehaltung einer Wärmedämmfähigkeit wie im Stand der Technik durch die erfindungsgemäße Rohrschale erheblich Mineralwollematerial eingespart werden, da die mittlere Rohdichte dann durchaus um 20% geringer als im Stand der Technik sein kann.

Die Erfindung lässt neben der erläuterten Ausführungsform weitere Gestaltungsansätze zu.

So kann die Umdrehungsgeschwindigkeit ω_{G} der Gegenwalzen 5, 6 und 7 im Zuge des Wickelvorgangs auch in Stufen reduziert werden, um so einen nicht stetigen Rohdichtegradientenabfall innerhalb der Wandung der herzustellenden Rohrschale vom Kernabschnitt zum Mantelabschnitt hin zu erzielen.

Ferner ist es auch möglich, dass die Gegenwalzen 5, 6 und 7 schrittweise weiter vom Kern 4 weg bewegt werden, um so ebenfalls die Rohdichteverteilung innerhalb der Wandung der herzustellenden Rohrschale zu steuern.

Ferner ist es nicht erforderlich, exakt drei Gegenwalzen vorzusehen. Die Anzahl kann je nach den praktischen Erfordernissen an der Wickelstation 1 variiert werden, solange eine zuverlässige Aufwickelung des Mineralwollevlieses 3 erzielt wird. Ebenso ist es nicht erforderlich, dass die Gegenwalzen im gleichmäßigen Winkelabstand um den Kern 4 herum angeordnet sind. Beispielsweise können die oberen Gegenwalzen 6 und 7 auch in geringerem Abstand zueinander vorliegen als zur unteren Gegenwalze 5.

Das erfindungsgemäße Verfahren ist dabei bevorzugt so gesteuert, dass die Umdrehungsgeschwindigkeit der Gegenwalzen in allen Prozessabschnitten gleich oder größer als die Umdrehungsgeschwindigkeit des Kerns 4 ist. Unter günstigen Prozessbedingungen kann es jedoch auch durchaus möglich sein, die Umdrehungsgeschwindigkeit der Gegenwalzen etwas geringer als die des Kerns 4 einzustellen.

## Patentansprüche

1. Verfahren zur Herstellung einer Rohrschale (8) aus Mineralwolle durch einen Wickelvorgang, mit den Schritten:
Bereitstellen eines Mineralwollevlieses (3) mit nicht ausgehärtetem Bindemittel,
Zuführen des Mineralwollevlieses (3) zu einer Wickelstation (1), welche einen Kern (4) sowie wenigstens eine Gegenwalze (5, 6, 7) aufweist,
Aufwickeln des Mineralwollevlieses (3) um den Kern (4), wobei die wenigstens eine Gegenwalze (5, 6, 7) im Zuge des Wickelvorgangs ausgehend von einem Anfangsabstand (X_{A}) weiter vom Kern (4) weg zu einem Endabstand bewegt wird, und
wobei die wenigstens eine Gegenwalze (5, 6, 7) zu Beginn des Wickelvorgangs mit einer höheren Umdrehungsgeschwindigkeit (ω_{G}) als am Ende des Wickelvorgangs angetrieben wird.

2. Verfahren nach Anspruch 1, **dadurch gekennzeichnet, dass** die Umdrehungsgeschwindigkeit (ω_{G}) der wenigstens einen Gegenwalze (5, 6, 7) am Ende des Wickelvorgangs etwa 20 bis 80 % und vorzugsweise etwa 30 bis 70 % geringer als zu Beginn des Wickelvorgangs ist.

3. Verfahren nach Anspruch 1 oder 2, **dadurch gekennzeichnet, dass** die Umdrehungsgeschwindigkeit (ω_{G}) der wenigstens einen Gegenwalze (5, 6, 7) im Zuge des Wickelvorgangs stetig verringert wird.

4. Verfahren nach Anspruch 1 oder 2, **dadurch gekennzeichnet, dass** die Umdrehungsgeschwindigkeit (ω_{G}) der wenigstens einen Gegenwalze (5, 6, 7) im Zuge des Wickelvorgangs unstetig, insbesondere in Stufen, verringert wird.

5. Verfahren nach einem der Ansprüche 1 bis 4, **dadurch gekennzeichnet, dass** die Umdrehungsgeschwindigkeit (ω_{G}) der wenigstens einen Gegenwalze (5, 6, 7) gleich oder größer als eine Umdrehungsgeschwindigkeit (ω_{K}) des Kerns (4) ist.

6. Verfahren nach einem der Ansprüche 1 bis 5, **dadurch gekennzeichnet, dass** eine Umdrehungsgeschwindigkeit (ω_{K}) des Kerns (4) im Zuge des Wickelvorgangs reduziert wird.

7. Verfahren nach Anspruch 6, **dadurch gekennzeichnet, dass** eine Umdrehungsgeschwindigkeit (ω_{K}) des Kerns (4) am Ende des Wickelvorgangs etwa 30 bis 80 % und vorzugsweise etwa 40 bis 70 % kleiner als zu Beginn des Wickelvorgangs ist.

8. Verfahren nach einem der Ansprüche 1 bis 7, **dadurch gekennzeichnet, dass** die wenigstens eine Gegenwalze (5, 6, 7) im Zuge des Wickelvorgangs nicht mit gleichmäßiger Geschwindigkeit vom Kern (4) weg bewegt wird.

9. Verfahren nach Anspruch 8, **dadurch gekennzeichnet, dass** die wenigstens eine Gegenwalze (5, 6, 7) zu Beginn des Wickelvorgangs langsamer und am Ende des Wickelvorgangs schneller vom Kern (4) weg bewegt wird.

10. Verfahren nach Anspruch 8 oder 9, **dadurch gekennzeichnet, dass** die Geschwindigkeit, mit der sich die wenigstens eine Gegenwalze (5, 6, 7) vom Kern (4) weg bewegt, im Zuge der Bewegung um 50 bis 200 % erhöht wird.

11. Rohrschale (8) aus Mineralwolle, insbesondere hergestellt mit dem Verfahren nach einem der Ansprüche 1 bis 10, mit einer höheren Rohdichte in einem inneren Wandungsbereich als in einen äußeren Wandungsbereich, **dadurch gekennzeichnet, dass** die Rohdichte innerhalb der Wandung quasi kontinuierlich von innen nach außen abnimmt.

## Claims

1. Method for producing a conduit shell (8) made of mineral wool by means of a winding process, with the steps:
preparing a mineral wool non-woven material (3) having an uncured binder,
feeding the mineral wool non-woven material (3) to a winding station (1) having a core (4) and at least one counter-roller (5, 6, 7),
winding the mineral wool non-woven material (3) around the core (4), wherein the at least one counter-roller (5, 6, 7) is moved further away from the core (4) from an initial distance (X_{A}) to a final distance within the course of the winding process, and
wherein the at least one counter-roller (5, 6, 7) is driven at a higher rotational speed (ω_{G}) at the beginning of the winding process than at the end of the winding process.

2. Method according to claim 1, **characterised in that** the rotational speed (ω_{G}) of the at least one counter-roller (5, 6, 7) at the end of the winding process is about 20 to 80% and preferably about 30 to 70% lower than at the beginning of the winding process.

3. Method according to claim 1 or 2, **characterised in that** the rotational speed (ω_{G}) of the at least one counter-roller (5, 6, 7) is continuously reduced in the course of the winding process.

4. Method according to claim 1 or 2, **characterised in that** the rotational speed (ω_{G}) of the at least one counter-roller (5, 6, 7) is continuously reduced in the course of the winding process.

5. Method according to one of claims 1 to 4, **characterised in that** the rotational speed (ω_{G}) of the at least one counter-roller (5, 6, 7) is the same or greater than a rotational speed (ω_{K}) of the core (4).

6. Method according to one of claims 1 to 5, **characterised in that** the rotational speed (ω_{K}) of the core (4) is reduced in the course of the winding process.

7. Method according to claim 6, **characterised in that** a rotational speed (ω_{K}) of the core (4) at the end of the winding process is about 30 to 80% and preferably about 40 to 70% lower than at the beginning of the winding process.

8. Method according to one of claims 1 to 7, **characterised in that** the at least one counter-roller (5, 6, 7) in the course of the winding process is not moved with uniform speed away from the core (4).

9. Method according to claim 8, **characterised in that** the at least one counter-roller (5, 6, 7) at the beginning of the winding process is moved more slowly and at the end of the winding process more quickly away from the core (4).

10. Method according to claim 8 or 9, **characterised in that** the speed, with which the at least one counter-roller (5, 6, 7) is moved away from the core (4), is increased by 50 to 200% in the course of the movement.

11. Conduit shell (8) of mineral wool, in particular produced by the method according to one of claims 1 to 10, has a higher bulk density in an inner wall area than in an outer wall area, **characterised in that** the bulk density inside the wall decreases quasi continuously from inside to outside.

## Revendications

1. Procédé de fabrication d'une coque tubulaire (8) en laine minérale par un processus d'enroulement, comprenant les étapes suivantes consistant à :
fournir un tissé en laine minérale (3) présentant un liant non durci,
amener le tissé en laine minérale (3) à une station d'enroulement (1), laquelle présente une âme (4) ainsi qu'au moins un cylindre complémentaire (5, 6, 7),
enrouler le tissé en laine minérale (3) autour de l'âme (4), sachant que le cylindre complémentaire (5, 6, 7) au moins au nombre de un est éloigné du noyau (4) au cours du processus d'enroulement en partant d'une distance de départ (X_{A}) en direction d'une distance finale, et
sachant que le cylindre complémentaire (5, 6, 7) au moins au nombre de un est entraîné au début du processus d'enroulement à une vitesse de rotation (ω_{G}) plus élevée que la vitesse de rotation à la fin du processus d'enroulement.

2. Procédé selon la revendication 1, **caractérisé en ce que** la vitesse de rotation (ω_{G}) du cylindre complémentaire (5, 6, 7) au moins au nombre de un est à la fin du processus d'enroulement inférieure d'environ 20 à 80 %, et de préférence inférieure d'environ 30 à 70 % à la vitesse de rotation au début du processus d'enroulement.

3. Procédé selon la revendication 1 ou 2, **caractérisé en ce que** la vitesse de rotation (ω_{G}) du cylindre complémentaire (5, 6, 7) au moins au nombre de un est réduite de manière régulière au cours du processus d'enroulement.

4. Procédé selon la revendication 1 ou 2, **caractérisé en ce que** la vitesse de rotation (ω_{G}) du cylindre complémentaire (5, 6, 7) au moins au nombre de un est réduite au cours du processus d'enroulement de manière irrégulière, en particulier par paliers.

5. Procédé selon l'une quelconque des revendications 1 à 4, **caractérisé en ce que** la vitesse de rotation (ω_{G}) du cylindre complémentaire (5, 6, 7) au moins au nombre de un est égale ou supérieure à une vitesse de rotation (ω_{G}) de l'âme (4).

6. Procédé selon l'une quelconque des revendications 1 à 5, **caractérisé en ce qu'**une vitesse de rotation (ω_{G}) de l'âme (4) est réduite au cours du processus d'enroulement.

7. Procédé selon la revendication 6, **caractérisé en ce qu'**une vitesse de rotation (ω_{G}) de l'âme (4) est à la fin du processus d'enroulement inférieure d'environ 30 à 80 %, et de préférence inférieure d'environ 40 et 70 % à la vitesse de rotation au début du processus d'enroulement.

8. Procédé selon l'une quelconque des revendications 1 à 7, **caractérisé en ce que** le cylindre complémentaire (5, 6, 7) au moins au nombre de un est éloigné de l'âme (4) au cours du processus d'enroulement à une vitesse qui n'est pas constante.

9. Procédé selon la revendication 8, **caractérisé en ce que** le cylindre complémentaire (5, 6, 7) au moins au nombre de un est éloigné de l'âme (4) à une vitesse plus lente au début du processus d'enroulement et à une vitesse plus rapide à la fin du processus d'enroulement.

10. Procédé selon la revendication 8 ou 9, **caractérisé en ce que** la vitesse, à laquelle le cylindre complémentaire (5, 6, 7) au moins au nombre de un s'éloigne de l'âme (4), est augmentée de 50 à 200 % au cours du déplacement.

11. Coque tubulaire (8) en laine minérale, fabriquée en particulier avec le procédé selon l'une quelconque des revendications 1 à 10, présentant une masse volumique apparente plus élevée dans une zone de paroi intérieure que dans une zone de paroi extérieure, **caractérisée en ce que** la masse volumique apparente décroît quasiment en continu de l'intérieur vers l'extérieur à l'intérieur de la paroi.
